# EUROPÄISCHE PATENTANMELDUNG

(11) **EP 0 870 932 A1**
(43) Veröffentlichungstag der Anmeldung: **14.10.1998**
(21) Anmeldenummer: 98890080.9
(22) Anmeldetag: 26.03.1998
(51) Int. Cl.: F15B 15/28

(54) **Pneumatischer oder hydraulischer Zylinder**

(30) Priorität: 08.04.1997 AT 586/97
(71) Anmelder: HYGRAMA AG, CH-6343 Rotkreuz (CH)
(72) Erfinder: Leonhardt, Peter, Dr.-Ing., 86972 Altenstadt (DE)
(74) Vertreter: Klein, Adam, Dipl.Ing.

(57) **Zusammenfassung**

Ein pneumatischer oder hydraulischer Zylinder (1) ist mit einem aus nicht-ferromagnetischem Material bestehenden Zylinderrohr (3) versehen, in dem ein Kolben verschiebbar angeordnet ist. Im Zylinderrohr (3) ist an dessen Außenseite wenigstens eine Längsnut (9) ausgespart, in die ein Signalgeber (8) zum berührungslosen Abtasten der Kolbenstellung befestigt ist. Am Kolben ist ein Permanentmagnet angeordnet, der durch sein Magnetfeld die vorgesehenen Signalgeber (8) betätigt. Zum Befestigen der Signalgeber (8) in der Längsnut (9) ist eine Blattfeder (17) vorgesehen, die mittels einer Schraube (12) am Gehäuse des Signalgebers (8) befestigt ist und durch eine mit einer Schrägfläche (20) versehene Schraubenmutter (19) beim Einschrauben der Schraube (12) nach außen gegen die Wand der Längsnut (9) verschwenkbar ist und so den Signalgeber (8) festklemmt. Die aus der Schraube (12) mit der Schraubenmutter (18) und der Blattfeder (17) bestehende Befestigungseinrichtung und die Einleitung der Signalleitung (10) in den Signalgeber (8) sind am selben Ende desselben vorgesehen.

## Beschreibung

Pneumatischer oder hydraulischer Zylinder mit einem Zylinderrohr, einem in diesem verschiebbaren Kolben und wenigstens einem Signalgeber zum berührungslosen Abtasten der Kolbenstellung, von dem eine Signalleitung wegführt, wobei das Zylinderrohr aus nicht-ferromagnetischem Material besteht, wenigstens eine Längsnut aufweist, in der die Signalgeber mittels Schrauben befestigt sind, am Kolben wenigstens ein Permanentmagnet angeordnet ist und die Signalgeber durch das Magnetfeld des oder der Permanentmagnete betätigbar sind.

Es ist bekannt, an pneumatischen oder hydraulischen Zylindern der angeführten Bauart die Stellung des Kolbens im Zylinderrohr durch Reedschalter oder durch Signalgeber, die nach anderen elektronischen Wirkprinzipien arbeiten, berührungslos abzutasten. Dazu sind am oder im Kolben des Zylinders ein oder mehrere Permanentmagnete angeordnet, die durch das nicht-ferromagnetische Zylinderrohr hindurch ein Magnetfeld aufbauen. Dieses tritt mit einem oder mehreren am Zylinderrohr angebrachten Signalgebern in Wechselwirkung, und es wird je nach Stärke und Ausbreitung des Feldes ein bestimmter Ansprechbereich erzeugt, in dem der Signalgeber seine Schaltfunktion erfüllt.

Aufgrund der verschiedenen Ausführungen der pneumatischen oder hydraulischen Zylinder sind verschiedene Maßnahmen bekannt, die Signalgeber am Zylindergehäuse, das in aller Regel aus dem Zylinderrohr und aus an dessen Enden angeordneten Zylinderdeckeln besteht, zu befestigen. Insbesondere sind zu diesem Zweck im Zylindergehäuse verschieden geformte Nuten angeordnet, meist Schwalbenschwanznuten oder hinterschnittene Nuten in T-Form, in denen die Signalgeber befestigt sind. Zur Befestigung der Signalgeber werden unterschiedliche Maßnahmen verwendet.

Bei einer bekannten Ausführung greift der Signalgeber auf einer Seite in eine Schwalbenschwanznut ein und wird von einem ihn mit einem Schenkel übergreifenden Klappwinkel gehalten, der mit dem Ende des zweiten Schenkels auf der anderen Seite in die Schwalbenschwanznut eingreift. Zum Festklemmen ist eine Spannschraube vorgesehen, die den seitlich des Signalgebers vorgesehenen Schenkel des Klappwinkels vom Signalgeber wegdrückt und so diesen in der Schwalbenschwanznut festklemmt. Bei einer anderen bekannten Ausführung ist der Signalgeber mit einem schwenkbaren Metallsteg verbunden, der gleichfalls in eine hinterschnittene Nut eingreift und durch Verschwenken in dieser festgeklemmt werden kann. Weiterhin ist es auch schon bekannt, den Signalgeber von einem Profilrahmen zu umgeben, der in eine Schwalbenschwanznut eingreift und außerhalb der Nut durch eine Schraube am Zylindergehäuse befestigt ist.

Bekannt ist es ferner, einen flexiblen Elastomerwerkstoff, z.B. Kautschuk, in einer Ausnehmung des Signalgebers anzuordnen und durch Zusammenpressen des flexiblen Werkstoffes mittels einer Schraube ein Festklemmen in einer hinterschnittenen Nut zu erreichen. Eine weitere Ausführung sieht einen mit seinen Enden in eine Schwalbenschwanznut eingreifenden Bügel vor, der über den Signalgeber gelegt ist und mittels einer Schraube gegen diesen und in der Nut festgespannt wird. Schließlich gibt es mehrteilige Ausführungen, bei denen der empfindliche Teil des Signalgebers in einem Bestandteil enthalten ist, wobei separate Befestigungsteile vorgesehen sind, die durch eine Schraube mit dem Gehäuse des Signalgebers verbunden sind, und eine weitere Schraube vorgesehen ist, die die in eine schwalbenschwanzförmige Nut eingreifenden Bestandteile auseinanderspreizt und so den Signalgeber festklemmt.

Die bisher bekannten Befestigungen der Signalgeber in den hinterschnittenen, meist schwalbenschwanzförmigen Nuten, die ebenso wie die Signalgeber von unterschiedlichen Herstellern auch mit verschiedenen Abmessungen und voneinander abweichenden Breiten hergestellt werden, verursachen meist Schwierigkeiten, weil die Befestigungsmittel in aller Regel einen erheblichen Raum beanspruchen. Bei den bekannten Ausführungen ist es daher nur möglich, die Kabeleinführung für die Signalabnahme in einem Bereich des Signalgebergehäuses vorzusehen, in dem keine Befestigungsmittel angebracht sind, bei einem an einem Ende durch eine Schraube befestigten Signalgeber also an dem der Schraube gegenüberliegenden Ende des Signalgebers.

Da der empfindliche Teil des Signalgebers im Bereich des Zylinderrohres liegen muß und es schwierig ist, das Signalgebergehäuse in einem Deckel zu montieren und zu befestigen, haben die bekannten Bauarten den Nachteil, daß der empfindliche Teil des Signalgebers nicht ohne weiteres am Ende des Zylinderrohres angeordnet werden kann. Dieser Abstand hat zur Folge, daß bei der Stellungsanzeige des Kolbens nicht der gesamte Hub des Kolbens, insbesondere nicht dessen Endlagen, erfaßt werden können. Weiterhin sind die bekannten Ausführungen und die beschriebenen Befestigungsarten aufwendig und zum Teil auch unsicher, weil sie sich bei auftretenden Temperaturschwankungen aufgrund unterschiedlicher Wärmeausdehnung und auch durch Stoßbeanspruchungen und Erschütterungen lockern können. Die eingestellten Schaltpunkte bleiben also bei den bekannten Ausführungen nicht sicher erhalten.

Der Erfindung liegt die Aufgabe zugrunde, die bisher bekannten Zylinder mit Signalgebern zum Abtasten der Kolbenbewegungen zu verbessern, insbesondere die Befestigung der Signalgeber zu vereinfachen und deren Verankerung an beliebiger Stelle in den Nuten zu ermöglichen.

Mit der Erfindung wird diese Aufgabe dadurch gelöst, daß die vorgesehenen Signalgeber in der Längsnut durch eine an einer ihrer Seiten angeordnete Blattfeder festgeklemmt sind, die an ihrem in der Längsnut liegenden Ende von diesem schräg gegen den Signalgeber nach oben verläuft, in entspanntem Zustand zumindest annähernd am Gehäuse des Signalgebers anliegt und an ihrem anderen Ende über das Gehäuse des Signalgebers einwärts abgebogen ist, wobei das abgebogene Ende der Blattfeder von einer Schraube durchsetzt ist, die im Gehäuse des Signalgebers drehbar abgestützt und mit ihrem Ende in eine Schraubenmutter eingeschraubt ist, die mit einer nach unten auswärts geneigten Schrägfläche am unteren Ende der Blattfeder anliegt und beim Einschrauben der Schraube das Ende der Blattfeder gegen die Seitenwand der Längsnut preßt. Es handelt sich dabei um eine zunächst zwar kompliziert scheinende Befestigungsart des Signalgebers, im Grunde aber eine einfache Ausführungsform ist, die aus nur wenigen, insgesamt drei Bestandteilen besteht und dennoch eine sichere Befestigung des Signalgebers in der Längsnut gestattet.

Durch diese einfache Ausbildung ist weiterhin eine bevorzugte Ausführungsform der Erfindung möglich, bei der die Schraube für das Festspannen der Blattfeder an einem Ende des Signalgebers gegen eine Seite des Gehäuses versetzt angeordnet und die Signalleitung am selben Ende des Gehäuses des Signalgebers seitlich neben der Schraube aus dem Gehäuse herausgeführt ist. Die Befestigungsteile für das Festklemmen des Signalgebers in der Längsnut und die Signalleitung können dabei aufgrund des geringen Raumbedarfes der Befestigungsmittel auch bei schmaler Längsnut und entsprechend schmalem Gehäuse des Signalgebers am selben Ende desselben nebeneinander angeordnet sein, wobei das andere Ende des Signalgebers zur Gänze für die Aufnahme des empfindlichen Teils desselben zur Verfügung steht. Der erfindungsgemäße Signalgeber kann daher so in der Längsnut montiert werden, daß sein empfindlicher Teil im Endbereich des Zylinderrohres liegt, so daß der gesamte Bereich des Kolbenhubes von der Stellungsanzeige erfaßt wird.

Eine weitere vorteilhafte Ausgestaltung der Erfindung besteht darin, daß die Blattfeder an ihrem in der Längsnut liegenden Ende mit Spitzen oder Schneiden versehen ist, die beim Festklemmen in die Seitenwand der Längsnut eindringen. Da das Zylinderrohr aus nicht-ferromagnetischem Material, also vorzugsweise aus Aluminium, allenfalls auch aus Kunststoff, besteht, ist dies ohne weiteres möglich. Diese Maßnahme stellt trotz der einfachen Befestigungseinrichtung sicher, daß der Signalgeber auch bei nur mäßig angezogener Schraube an jeder beliebigen Stelle der Längsnut ortsfest verankert werden kann und sich weder bei Temperaturschwankungen noch unter Einwirkung von Stoßbeanspruchungen oder Erschütterungen löst oder verschiebt.

Die Längsnut ist im Rahmen der Erfindung vorzugsweise eine an sich bekannte Schwalbenschwanznut, in die erfindungsgemäß auf einer Seite ein Fortsatz des Gehäuses des Signalgebers und auf der anderen Seite die Blattfeder eingreift. Es ist dabei möglich, bei gelöster Befestigungsschraube den Signalgeber mit seinem Fortsatz an beliebiger Stelle der Längsnut zunächst in geneigter Lage in diese einzusetzen und anschließend die Seite mit der Blattfeder in die Längsnut zu verschwenken, bis auch das Ende der Blattfeder auf der anderen Seite in der Längsnut liegt. Durch bloßes Verdrehen der Befestigungsschraube kann dann der Signalgeber sicher verankert werden.

Durch die erfindungsgemäß vorgesehene Befestigung unter Verwendung einer Blattfeder, die mit Hilfe einer Schraubenverbindung zwangsweise nach außen gespreizt wird, wird auch ein optimaler Ausgleich von allfälligen Maßabweichungen in der Breite der Längsnut erreicht. Von weiterem Vorteil ist, daß alle Bestandteile der Befestigung, sowohl die Schraube samt abgeschrägter Mutter und die Blattfeder, auch bei gelöster Befestigung unverlierbar mit dem Gehäuse des Signalgebers zusammengefügt sind.

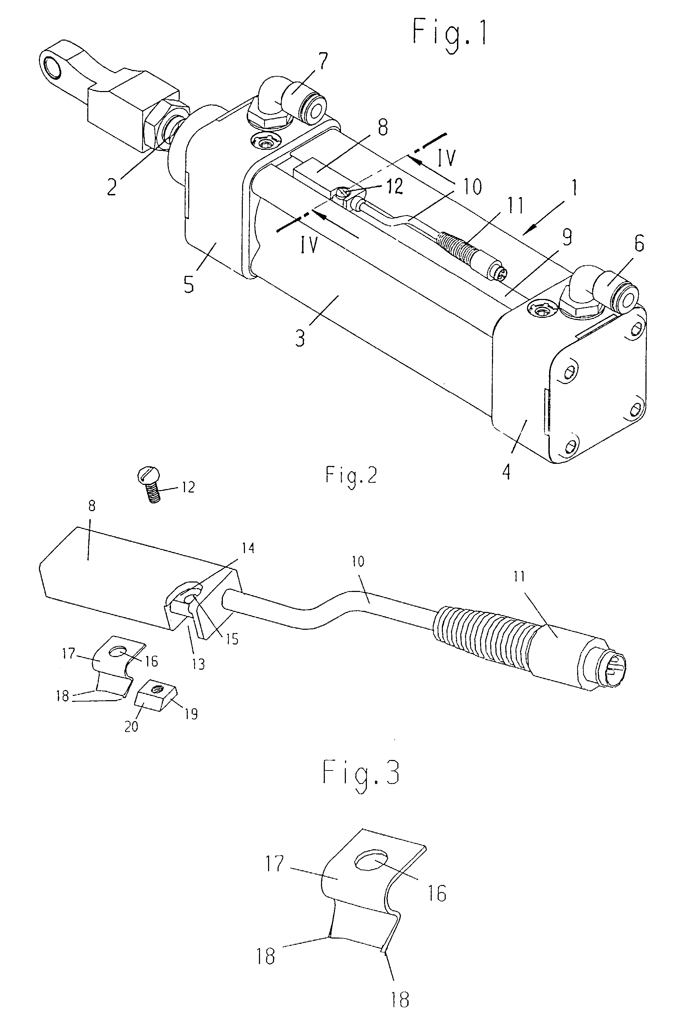

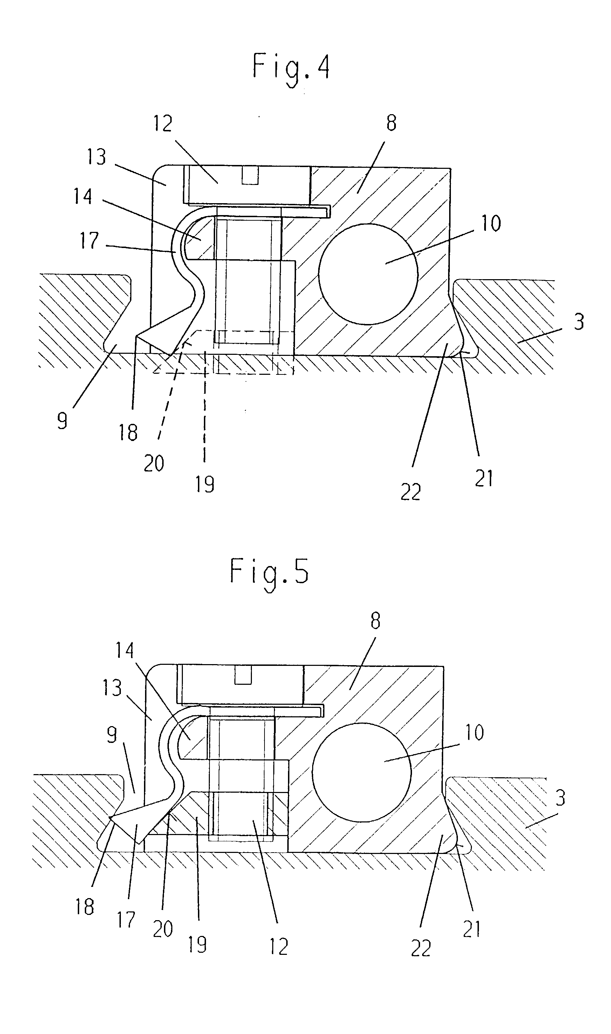

Weitere Einzelheiten und Vorteile der Erfindung ergeben sich aus den Zeichnungen, in denen ein Ausführungsbeispiel dargestellt ist. In diesen zeigt Fig. 1 einen erfindungsgemäßen pneumatischen oder hydraulischen Zylinder mit montiertem Signalgeber in perspektivischer Seitenansicht, Fig. 2 den Signalgeber zusammen mit den abmontierten Bestandteilen der Befestigungseinrichtung in vergrößerter, gleichfalls perspekti--vischer Seitenansicht, Fig. 3 eine noch weiter vergrößerte Ansicht der Blattfeder und die Fig. 4 und 5 einen Teilschnitt durch den Zylinder nach Fig. 1 nach der Linie IV-IV in Fig. 1, wobei in Fig. 4 die Befestigungseinrichtung für den Signalgeber gelöst und Fig. 5 der Signalgeber fertig montiert dargestellt ist.

In der Zeichnung ist der erfindungsgemäße pneumatische oder hydraulische Zylinder mit 1 bezeichnet. Im Zylinder 1 ist ein nicht dargestellter Kolben verschiebbar, der mit einer Kolbenstange 2 verbunden ist. Der Zylinder 1 besteht aus einem Zylinderrohr 3, das an seinen Enden durch Zylinderdeckel 4 und 5 abgeschlossen ist. Durch den Zylinderdeckel 5 ist die Kolbenstange 2 dichtend herausgeführt. Auf jedem Zylinderdeckel 4,5 ist ein Anschlußstück 6 und 7 für die Zu- und Ableitung des den Zylinder 1 betätigenden pneumatischen oder hydraulischen Druckmittels vogesehen.

Wie aus Fig. 1 ferner hervorgeht, ist auf dem Zylinderrohr 3 ein Signalgeber 8 angeordnet, der in Fig. 2 vergrößert in teilweise zerlegtem Zustand dargestellt ist und zum berührungslosen Abtasten der Kolbenstellung im Zylinder 1 bestimmt ist. Zur Befestigung des Signalgebers 8 am Zylinderrohr 3 ist dieses mit wenigstens einer Längsnut 9 versehen, in die der Signalgeber 8 wenigstens teilweise versenkt eingesetzt ist. Es können mehrere Längsnuten 9 am Außenumfang des Zylinderrohres 3 vorgesehen und in jeder Längsnut 9 können zwei oder mehrere Signalgeber 8 angeordnet sein. Die Längsnuten 9 sind hinterschnitten, vorzugsweise schwalbenschwanzförmig ausgebildet. Sie können aber auch rechteckig, oval oder in anderer Form erweitert sein. Die Erweiterungen haben den Zweck, eine sichere Verankerung der Signalgeber 8 in der Längsnut 9 zu ermöglichen, wie später noch beschrieben wird. An jeden Signalgeber 8 ist eine Signalleitung 10 angeschlossen, so daß die vorgesehenen Signalgeber 8 direkt oder über einen im Ausführungsbeispiel dargestellten Stecker 11 mit einem Anzeigegerät oder einer Auswerteschaltung für die jeweils abgetastete Kolbenstellung verbunden werden kann. Der Fig. 1 ist schließlich noch eine Schraube 12 zu entnehmen, mit der der Signalgeber 8 in der Längsnut 9 befestigt ist.

Die genaue Ausbildung des Signalgebers 8 und der Befestigung desselben in der Längsnut 9 sind in den Fig. 2 bis 5 dargestellt. Aus Fig. 2 geht hervor, daß im Signalgeber 8 eine von einer Seite ausgehende Ausnehmung 13 mit einem versenkt angeordneten Sitz 14 für den Kopf der Schraube 12 vorgesehen ist. Die Schraube 12 durchsetzt eine Bohrung 15 im Sitz 14 und eine Bohrung 16 in einer Blattfeder 17, die aus Fig. 2 ersichtlich und in Fig. 3 vergrößert dargestellt ist. Die Blattfeder 17 ist an ihren mit der Bohrung 16 versehenen Abschnitt anschließend etwa S-förmig der Seite des Signalgebers 8 entlang nach unten gebogen und endet mit Spitzen oder Schneiden 18. In Fig. 2 ist ferner eine Schraubenmutter 19 für die Schraube 12 dargestellt, die mit einer nach unten auswärts geneigten Schrägfläche 20 versehen ist.

Bei zusammengebautem Signalgeber 8 befindet sich das obere Ende der Blattfeder 17 mit der Bohrung 16 zwischen dem Kopf der Schraube 12 und dem Sitz 14, wie aus den Fig. 4 und 5 entnommen werden kann. Gemäß den Fig. 4 und 5 ist die die Bohrungen 15 und 16 durchsetzende Schraube 12 mit ihrem mit Gewinde versehenen Ende in die Schraubenmutter 19 eingeschraubt. Die Schrägfläche 20 liegt an der Blattfeder 17 an.

In Fig. 4 ist die Schraubenmutter 19 gestrichelt dargestellt und die Schraube 12 nur wenig in die Schraubenmutter 19 eingeschraubt. Die Blattfeder 17 befindet sich dabei in ihrer eingeschwenkten, an der Seite des Signalgebers 8 weitgehend anliegenden Stellung. In dieser Stellung ist es möglicht, den Signalgeber 8 mit seinem rechts unten dargestellten Seitenrand 21, der an einem vorragenden Fortsatz 22 seines Gehäuses vorgesehen ist, in die Längsnut einzuführen und um den Seitenrand 21 als Achse gegen den Uhrzeigersinn in die Längsnut 9 hinein oder im Uhrzeigersinn aus dieser herauszuschwenken, wobei die Schneiden 18 der eingeschwenkten Blattfeder 17 am Rand der Längsnut 9 vorbeigeschwenkt werden können. Bei nur wenig in die Schraubenmutter 19 eingeschraubter Schraube 12, wie dies in Fig. 4 gezeigt ist, kann der Signalgeber 8 natürlich nicht bis in die in Fig. 4 gezeigte Endlage in die Längsnut 9 hineingeschwenkt werden, weil die gestrichelt dargestellte Schraubenmutter 19 früher auf dem Boden der Längsnut 9 anschlägt. Sobald dies der Fall ist, muß die Schraube 12 weiter in die Schraubenmutter 19 eingeschraubt werden. Ihre Schrägfläche 20 gleitet dabei der Blattfeder 17 entlang gegen den Schraubenkopf nach oben und bewegt das freie Ende der Blattfeder 17 mit den Schneiden 18 nach außen gegen den Rand der Längsnut 9.

Fig. 5 zeigt den Signalgeber 8 in der fertig montierten Stellung in der Längsnut 9. Die Schraubenmutter 19 ist dabei durch Einschrauben der Schraube 12 so weit nach oben gezogen, daß die Schneiden 18 der Blattfeder 17 in das Material des Gehäuses des Signalgebers 8 eindringen. Der Signalgeber 8 wird dadurch in der Längsnut 9 nicht nur quer zu seiner Längsrichtung festgeklemmt, sondern durch das krallenartige Eingreifen der Schneiden 18 in das Material des Gehäuses des Zylinderrohres 3 auch in Längsrichtung unverschiebbar verankert.

Aufgrund der beschriebenen Ausbildung kann der erfindungsgemäße Signalgeber 8 in die Längsnut 9 auch eingesetzt und in dieser auf einfache Weise verankert werden, wenn die Längsnut 9 an ihren Enden durch die Zylinderdeckel 4 und 5 abgeschlossen, also in Längsrichtung nicht zugänglich ist. Aus den Zeichnungen, insbesondere aus den Fig. 4 und 5, kann auch entnommen werden, daß sich die Blattfeder 17 nur etwa über die halbe Breite des Signalgebers 8 erstreckt, wodurch in der anderen Hälfte des Signalgebers 8 Raum für die Einleitung der Signalleitung 10 verbleibt.

Die Befestigungseinrichtung für den Signalgeber 8, also die Schraube 12 mit der Schraubenmutter 19 und die Blattfeder 17, liegen also am selben Ende des Signalgebers 8 wie die Signalleitung 10. Dadurch können die funktionellen und empfindlichen Bestandteile des Signalgebers 8 im Bereich des anderen Endes des Signalgebers 8 vorgesehen werden, wobei sie an die Zylinderdeckel 4, 5 anschließend am Ende des Zylinderrohres 3 liegen. Dadurch ist es möglich, den gesamten Hubbereich des Kolbens im Zylinder 1 durch Signalgeber 8 abzutasten.

Wie schon erwähnt, können in jeder Längsnut 9 zwei oder auch mehrere Signalgeber 8 angeordnet sein und es können im Zylinderrohr 3 mehrere Längsnuten 9 zur Aufnahme von Signalgebern 8 ausgespart sein, so daß es möglich ist, mit der erfindungsgemäßen Ausbildung alle in der Praxis auftretenden Anforderungen hinsichtlich der Abtastung der Kolbenbewegungen zu erfüllen.

## Patentansprüche

1. Pneumatischer oder hydraulischer Zylinder (1) mit einem Zylinderrohr (3), einem in diesem verschiebbaren Kolben und wenigstens einem Signalgeber (8) zum berührungslosen Abtasten der Kolbenstellung, von dem eine Signalleitung (10) wegführt, wobei das Zylinderrohr (3) aus nicht-ferromagnetischem Material besteht, wenigstens eine Längsnut (9) aufweist, in der die Signalgeber (8) mittels Schrauben (12) befestigt sind, am Kolben wenigstens ein Permanentmagnet angeordnet ist und die Signalgeber (8) durch das Magnetfeld des oder der Permanentmagnete betätigbar sind, **dadurch gekennzeichnet**, daß die vorgesehenen Signalgeber (8) in der Längsnut (9) durch eine an einer ihrer Seiten angeordnete Blattfeder (17) festgeklemmt sind, die an ihrem in der Längsnut (9) liegenden Ende von diesem schräg gegen den Signalgeber (8) nach oben verläuft, in entspanntem Zustand zumindest annähernd am Gehäuse des Signalgebers (8) anliegt und an ihrem anderen Ende über das Gehäuse des Signalgebers (8) einwärts abgebogen ist, wobei das abgebogene Ende der Blattfeder (17) von einer Schraube (12) durchsetzt ist, die im Gehäuse des Signalgebers (8) drehbar abgestützt und mit ihrem Ende in eine Schraubenmutter (19) eingeschraubt ist, die mit einer nach unten auswärts geneigten Schrägfläche (20) am unteren Ende der Blattfeder (17) anliegt und beim Einschrauben der Schraube (12) das Ende der Blattfeder (17) gegen die Seitenwand der Längsnut (9) preßt.

2. Zylinder nach Anspruch 1, dadurch gekennzeichnet, daß die Schraube (12) für das Festspannen der Blattfeder (17) an einem Ende des Signalgebers (8) gegen eine Seite des Gehäuses versetzt angeordnet und die Signalleitung (10) am selben Ende des Gehäuses des Signalgebers (8) seitlich neben der Schraube (12) aus dem Gehäuse herausgeführt ist.

3. Zylinder nach Anspruch 1 oder 2, dadurch gekennzeichnet, daß die Blattfeder (17) an ihrem in der Längsnut (9) liegenden Ende mit Spitzen oder Schneiden (18) versehen ist, die beim Festklemmen in die Seitenwand der Längsnut (9) eindringen.

4. Zylinder nach Anspruch 1, 2 oder 3, dadurch gekennzeichnet, daß die Längsnut (9) eine an sich bekannte Schwalbenschwanznut ist, in die auf einer Seite ein Fortsatz (22) des Gehäuses des Signalgebers (8) und auf der anderen Seite die Blattfeder (17) eingreift.
